# EUROPEAN PATENT SPECIFICATION

(11) **EP 4 161 114 B1**
(45) Date of publication and mention of the grant of the patent: **31.12.2025**
(21) Application number: 20938040.1
(22) Date of filing: 04.08.2020
(51) Int. Cl.: H04L 65/1016, H04L 65/1073, H04W 60/00, H04W 8/18

(54) **IMS REGISTRATION METHOD, STORAGE MEDIUM, AND ELECTRONIC TERMINAL**
IMS-REGISTRIERUNGSVERFAHREN, SPEICHERMEDIUM UND ELEKTRONISCHES ENDGERÄT
PROCÉDÉ D'ENREGISTREMENT IMS, SUPPORT DE STOCKAGE ET TERMINAL ÉLECTRONIQUE

(30) Priority: 26.05.2020 CN 202010453368
(43) Date of publication of application: 05.04.2023
(73) Proprietor: JRD Communication (Shenzhen) Ltd, Shenzhen, Guangdong 518052 (CN)
(72) Inventor: DU, Kai, Shenzhen, Guangdong 518052 (CN); YANG, Lina, Shenzhen, Guangdong 518052 (CN); LI, Tao, Shenzhen, Guangdong 518052 (CN); ZHANG, Fan, Shenzhen, Guangdong 518052 (CN)
(74) Representative: Murgitroyd & Company
(86) International application number: PCT/CN2020/106898
(87) International publication number: WO 2021/237936

(56) References cited:
- WO-A1-2006/118416
- CN-A- 107 579 945
- CN-A- 107 579 945
- CN-A- 107 580 308
- CN-A- 110 958 210
- US-A1- 2010 329 243

## Description

### FIELD OF DISCLOSURE

The present application relates to the communication technology field, and in particular, to an IMS registration method, a computer-readable storage medium, and an electronic terminal.

### BACKGROUND

In the early stage of 5G network deployment, IMS (Internet Protocol Multimedia Subsystem) services under 5G networks are unstable. Accordingly, a user equipment that has activated an IMS service can use an IMS service of an operator in a 5G network. When the user equipment has not activated the IMS service, the user equipment cannot use the 5G IMS service.

An existing IMS registration method is as follows. A user equipment sends an IMS registration request to a core network. When a 5G network supports an IMS, the core network feeds back a message of supporting the IMS to the user equipment, and the user equipment triggers an IMS registration process according to the message. When the user equipment does not activate an IMS service, the IMS registration process cannot be completed, and the IMS registration fails. This results in unnecessary IMS execution processes and wastes communication resources.

Document CN107579945 proposes a method for automatically activating IMS services of a network protocol multimedia subsystem. The method includes: receiving an IMS registration request sent by a terminal; determining whether the terminal meets the automatic activation triggering condition of the IMS service according to the IMS registration request; when the terminal IMS service meets the automatic activation triggering condition, activating the IMS service for the terminal.

Document US2010/329243 proposes a system and method for accessing voice services using a user equipment (UE) in a communication system is provided. The UE is configured to receive a first message which may include an audio session indication. The method includes the step of sending a second message in response to the first message, with the second message being based on one or more voice service indicators comprising at least one value. The second message may be a response indicating not to select an alternative domain. The second message may also be a not acceptable response.

### SUMMARY OF DISCLOSURE

Embodiments of the present disclosure provide an IMS registration method, a computer-readable storage medium, and an electronic terminal capable of avoiding unnecessary IMS execution processes to save communication resources.

The invention is defined by the subject-matter of the appended set of claims.

In the IMS registration method, the computer-readable storage medium, and the electronic terminal provided by the present disclosure, the IMS registration request can be sent to the core network to enable the core network to detect, according to the IMS registration request, whether the electronic terminal activates the IMS service and to feed back the detection result. Then, it is determined whether to trigger the IMS registration process according to the detection result, so as to avoid that electronic terminal triggers unnecessary IMS registration processes to save communication resources.

### BRIEF DESCRIPTION OF DRAWINGS

Technical solutions and the advantageous effects of the present disclosure are best understood from the following detailed description with reference to the accompanying figures and embodiments.
FIG. 1 illustrates a schematic diagram of an architecture of a 5G system.
FIG. 2 illustrates a schematic flowchart of an IMS registration method provided by an embodiment of the present disclosure.
FIG. 3 illustrates another schematic flowchart of an IMS registration method provided by an embodiment of the present disclosure.
FIG. 4 illustrates a schematic structural diagram of an IMS registration device provided by an embodiment of the present disclosure.
FIG. 5 illustrates a schematic structural diagram of a determining module in the IMS registration device provided by an embodiment of the present application.
FIG. 6 illustrates a schematic structural diagram of an electronic terminal provided by an embodiment of the present disclosure.
FIG. 7 illustrates another schematic structural diagram of an electronic terminal provided by an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are only a part of the embodiments of the present disclosure, but not all of the embodiments. Based on the embodiments in the present disclosure, all other embodiments obtained by those skilled in the art without creative efforts fall within the scope of protection of the present disclosure.

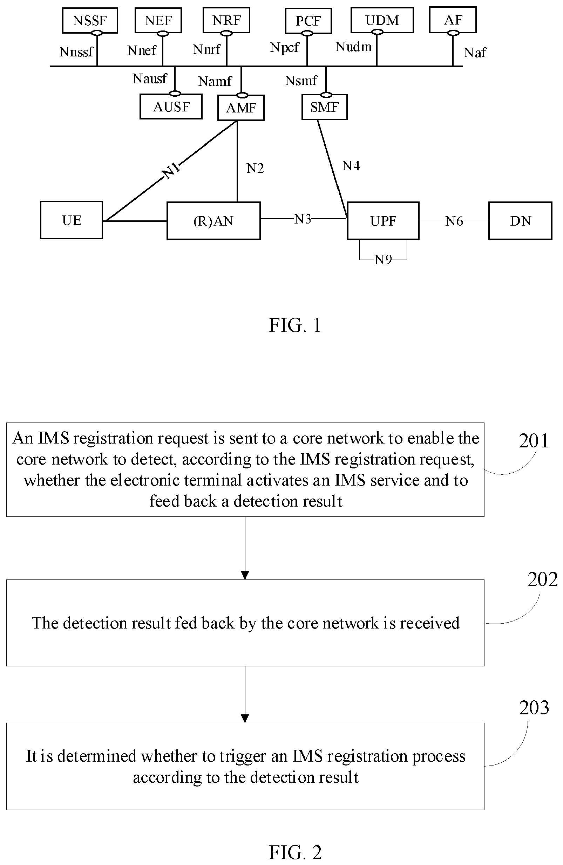

FIG. 1 illustrates a schematic diagram of an architecture of a 5G system. The 5G system includes a core network. The core network includes multiple NF (network function) network elements. The multiple NF network elements include:
an NSSF (network slice selection function) network element configured to manage network slice information, wherein a set of network slice selection auxiliary information is stored in the NSSF network element and configured to provide a network slice selection strategy for a UE (user equipment);
an NEF (network exposure function) network element responsible for opening network data to outside;
an NRF (network repository function) network element responsible for registering and managing each of the NF network elements, storing function information of each of the NF network elements in the core network, and providing each of the NF network elements with discovery network element information;
a PCF (policy control function) network element configured to formulate a user control strategy and provide a user with a network selection and mobility management strategy;
a UDM (unified data management) network element configured to store information data of user subscription including user identification, user subscription data, and authentication data and so on;
an AF (application function) network element configured to allow an application trusted by an operator to directly interact with each of the network elements in the core network;
an AUSF (authentication server function) network element configured to cooperate with the UDM network element to be responsible for user authentication data processing to generate terminal access authority;
an AMF (access and mobile management function) responsible for terminal mobility and access management specifically including management of mobile terminal location information, security, and business continuity, so that a connection state of a terminal and a network achieves the best; and
an SMF (session management function) responsible for a session management function of the UE to create, maintain, and delete a session for the terminal and to access a UPF network element.

Each of the NEF network element, the NRF network element, the PCF network element, the UDM network element, the AF network element, the AUSF network element, the AMF, and the SMF can interact through an NEF service-based interface exhibited by NEF (Nnef), an AUSF service-based interface exhibited by AUSF (Nausf), an NRF service interface exhibited by NRF (Nnrf), an AMF service interface exhibited by AMF (Namf), a PCF service interface exhibited by PCF (Npct), an SMF service interface exhibited by SMF (Nsmf), a UDM service interface exhibited by UDM (Nudm), and an AF service interface exhibited by AF (Naf). The same service can be called by multiple of the NF network elements to reduce coupling degrees of interface definitions among the NF network elements and to realize on-demand customization of the NF network elements. In FIG. 1, the UE can access the AMF network element of the core network through a radio access network (RAN), or can directly access the AMF network element. An interface between the UE and the AMF network element is an N1 interface, and an interface between the RAN network element and the AMF network element is an N2 interface. The RAN network element can interact with a user plane function (UPF) network element through an N3 interface. The UPF network element can access the SMF network element of the core network through an N4 interface and interact with the core network. The UPF network element can also access a data network (DN) network element through an N6 interface to and interact with the DN network element.

FIG. 2 illustrates a schematic flowchart of an IMS registration method provided by an embodiment of the present disclosure. The IMS registration method is applied to an electronic terminal. The electronic terminal can be the UE in FIG. 1. A specific flow of the IMS registration method can be as follows.

In 201, an IMS registration request is sent to a core network to enable the core network to detect, according to the IMS registration request, whether the electronic terminal activates an IMS service and to feed back a detection result.

In the embodiment of the present disclosure, a SIM (subscriber identity module) card can be inserted into the electronic terminal. Before the electronic terminal registers with the IMS, the SIM card in the electronic terminal can activate the IMS service. For example, the electronic terminal sends an IMS service activation request to the core network. The IMS service activation request includes a SIM card identification code, such as a phone number. The core network configures, according to the IMS service activation request, user data which is required when the IMS service is activated for the electronic terminal, and the core network stores the configured user data and the SIM card identification code into the UDM network element correspondingly. That is, when the electronic terminal activates the IMS service, the UDM network element of the core network stores the user data and the SIM card identification code of the electronic terminal. When the electronic terminal does not activate the IMS service, the UDM network element of the core network does not store the user data corresponding to the SIM card identification code.

When the electronic terminal registers with an IMS, the electronic terminal sends the IMS registration request to an AMF network element in the core network. The IMS registration request can include an identification code of the electronic terminal, such as the SIM card identification code. After analyzing the SIM card identification code in the IMS registration request, the AMF network element detects, according to the SIM card identification code, whether the electronic terminal activates the IMS service. Specifically, the AMF network element searches data stored in a UDM network element. When the SIM card identification code and the corresponding user data are searched from the UDM network element, it is determined that the electronic terminal activates the IMS service, and the detection result indicating "activated" is fed back to the electronic terminal. When the SIM card identification code and the corresponding user data are not searched from the UDM network element, it is determined that the electronic terminal does not activate the IMS service, and the detection result indicating "not activated" is fed back to the electronic terminal.

Specifically, a field can be set in the detection result. That is, an IMS-VoPS-3GPP field is configured to indicate whether the electronic terminal activates the IMS service. When the electronic terminal activates the IMS service, the IMS-VoPS-3GPP field is set to 1. When the electronic terminal does not activate IMS service, the IMS-VoPS-3GPP field is set to 0.

In 202, the detection result fed back by the core network is received.

In the embodiment of the present disclosure, after the AMF network element in the core network obtains the detection result, it sends the detection result including the IMS-VoPS-3GPP field to the electronic terminal, and the electronic terminal can determine, according to the IMS-VoPS-3GPP field in the detection result, whether the IMS service is activated by the electronic terminal.

In 203, it is determined whether to trigger an IMS registration process according to the detection result.

In the embodiment of the present disclosure, the detection result is identified. When the identified detection result is that the electronic terminal activates the IMS service, the IMS registration process is triggered. When the identified detection result is that the electronic terminal does not activate the IMS service, the IMS registration process is not triggered.

In detail, the determining whether to trigger the IMS registration process according to the detection result in step 203 specifically includes:
identifying the detection result;
determining a state of a 5G network according to an identification result; and
determining whether to trigger the IMS registration process according to the state of the 5G network.

It should be noted that the detection result does not clearly indicate whether the electronic terminal activates the IMS service but includes the IMS-VoPS-3GPP field and a corresponding value. Accordingly, it is determined whether the electronic terminal activates the IMS service by identifying the IMS-VoPS- 3GPP field.

In detail, the identifying the detection result specifically includes:
identifying the IMS-VoPS-3GPP field in the detection result;
determining that the identification result is that the electronic terminal activates the IMS service, when it is identified that the IMS-VoPS-3GPP field is 1; and
determining that the identification result is that the electronic terminal does not activate the IMS service, when it is identified that the IMS-VoPS-3GPP field is 0.

Since an IMS registration requires a 5G network to support an IMS and an existing 5G network generally supports an IMS, an electronic terminal that does not activate an IMS service also triggers the IMS registration process. This results in waste of resources. Accordingly, in the embodiment of the present disclosure, the state of the 5G network is set according to the detection result. The state of the 5G network refers to a state of whether the 5G network supports the IMS.

In detail, the determining the state of the 5G network according to the identification result specifically includes:
determining that the state of the 5G network is that the 5G network supports the IMS, when the identification result is that the electronic terminal activates the IMS service; and
determining that the state of the 5G network is that the 5G network does not support the IMS, when the identification result is that the electronic terminal does not activate the IMS service.

It should be noted that the state of the 5G network in the embodiment of the present disclosure does not refer to an actual state of the 5G network, but refers to the state of the 5G network that is set according to the identification result in the embodiment of the present disclosure. For example, the actual state of the 5G network is that the 5G network supports the IMS. When the identification result in the embodiment of the present disclosure is that the electronic terminal does not activate the IMS service, the state of the 5G network in the embodiment of the present disclosure can be set, based on the identification result, to the 5G network which does not support the IMS.

After the state of the 5G network is determined, the determining whether to trigger the IMS registration process according to the state of the 5G network specifically includes:
triggering the IMS registration process, when the state of the 5G network is that the 5G network supports the IMS; and
stopping triggering the IMS registration process, when the state of the 5G network is that the 5G network does not support the IMS.

It should be noted that when the state of the 5G network is set to be the 5G network which supports the IMS in the embodiment of the present disclosure, the IMS registration process can continue to be triggered to realize the IMS registration. After completing the IMS registration process, the core network feedbacks successful registration information to the electronic terminal. After receiving the successful registration information, the electronic terminal can use the IMS service. When the state of the 5G network is set to be the 5G network which does not support the IMS in the embodiment of the present disclosure, the IMS registration process is not triggered to avoid unnecessary execution processes to save communication resources.

It can be appreciated from the above that in the IMS registration method provided by the present disclosure, the IMS registration request can be sent to the core network to enable the core network to detect, according to the IMS registration request, whether the electronic terminal activates the IMS service and to feed back the detection result. Then, it is determined whether to trigger the IMS registration process according to the detection result, so as to avoid that electronic terminal triggers unnecessary IMS registration processes to save communication resources.

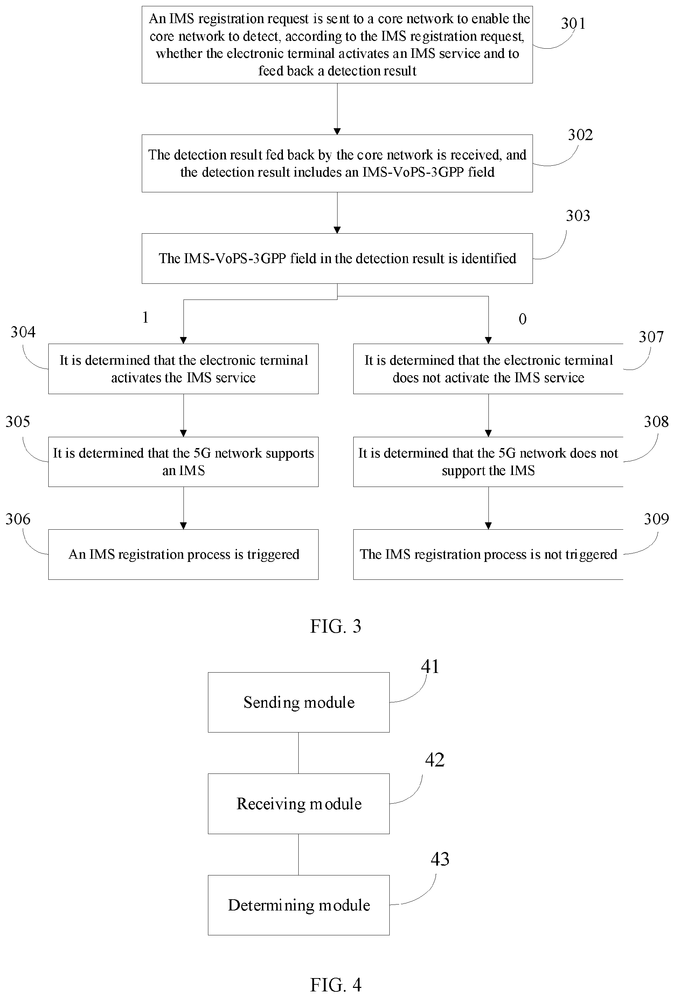

FIG. 3 illustrates a schematic flowchart of an IMS registration method provided by another embodiment of the present disclosure. The IMS registration method is applied to an electronic terminal. A specific flow of the IMS registration method can be as follows.

In 301, an IMS registration request is sent to a core network to enable the core network to detect, according to the IMS registration request, whether the electronic terminal activates an IMS service and to feed back a detection result.

For example, an electronic terminal A sends an IMS registration request to an AMF network element in the core network under a 5G network, and the IMS registration request includes an identification code B of the electronic terminal A. After parsing out the identification code B, the AMF network element inquires whether IMS service activation information corresponding to the identification code B is stored in a UDM network element. If yes, the AMF sets an IMS-VoPS-3GPP field to 1. If no, the AMF network element sets the IMS-VoPS-3GPP field to 0. The IMS-VoPS-3GPP field is added to the detection result, and the detection result is fed back to electronic terminal A.

In 302, the detection result fed back by the core network is received, and the detection result includes an IMS-VoPS-3GPP field.

For example, the electronic terminal A receives the detection result fed back by the AMF network element.

In 303, the IMS-VoPS-3GPP field in the detection result is identified. When it is identified that the IMS-VoPS-3GPP field is 1, step 304 is performed. When it is identified that the IMS-VoPS-3GPP field is 0, step 307 is performed.

For example, the electronic terminal A parses the IMS-VoPS-3GPP field in the detection result to obtain that the IMS-VoPS-3GPP field is 1 or 0.

In 304, it is determined that the electronic terminal activates the IMS service.

For example, the electronic terminal A parses out that the IMS-VoPS-3GPP field is 1 to indicate that the electronic terminal A activates the IMS service.

In 305, it is determined that the 5G network supports an IMS.

For example, the electronic terminal A activates the IMS service, and then the electronic terminal A can determine that the 5G network supports the IMS.

In 306, an IMS registration process is triggered.

For example, the electronic terminal A triggers the IMS registration process and uses the IMS service after a successful registration.

In 307, it is determined that the electronic terminal does not activate the IMS service.

For example, the electronic terminal A parses out that the IMS-VoPS-3GPP field is 0 to indicate that electronic terminal A does not activate the IMS service.

In 308, it is determined that the 5G network does not support the IMS.

For example, the electronic terminal A does not activate the IMS service, and then the electronic terminal A an determine that the 5G network does not support the IMS.

In 309, the IMS registration process is not triggered.

For example, the electronic terminal A does not continue to initiate the IMS registration process, so as to avoid unnecessary IMS execution processes to save communication resources.

According to the methods described in the above-mentioned embodiments, the present embodiment is further described from the perspective of an IMS registration device. The IMS registration device can be integrated into an electronic terminal.

Please refer to FIG. 4. FIG. 4 specifically describes the IMS registration device provided by an embodiment of the present disclosure. The IMS registration device can include: a sending module 41, a receiving module 42, and a determining module 43.

The sending module 41 is configured to send an IMS registration request to a core network to enable the core network to detect, according to the IMS registration request, whether the electronic terminal activates an IMS service and to feed back a detection result.

In the embodiment of the present disclosure, when the electronic terminal registers with an IMS, the electronic terminal sends the IMS registration request to an AMF network element in the core network. The IMS registration request can include an identification code of the electronic terminal, such as a SIM card identification code. After analyzing the SIM card identification code in the IMS registration request, the AMF network element detects, according to the SIM card identification code, whether the electronic terminal activates the IMS service. Specifically, the AMF network element searches data stored in a UDM network element. When the SIM card identification code and the corresponding user data are searched from the UDM network element, it is determined that the electronic terminal activates the IMS service, and the detection result indicating "activated" is fed back to the electronic terminal. When the SIM card identification code and the corresponding user data are not searched from the UDM network element, it is determined that the electronic terminal does not activate the IMS service, and the detection result indicating "not activated" is fed back to the electronic terminal.

The receiving module 42 is configured to receive the detection result fed back by the core network.

In the embodiment of the present disclosure, after obtaining the detection result, the AMF network element in the core network sends the detection result including the IMS-VoPS-3GPP field to the electronic terminal, and the electronic terminal can use the IMS-VoPS-3GPP field in the detection result field to determine whether the IMS service is activated by the electronic terminal.

The determining module 43 is configured to determine whether to trigger an IMS registration process according to the detection result.

In the embodiment of the present disclosure, the detection result is identified. When the identified detection result is that the electronic terminal activates the IMS service, the IMS registration process is triggered. When the identified detection result is that the electronic terminal does not activate the IMS service, the IMS registration process is not triggered.

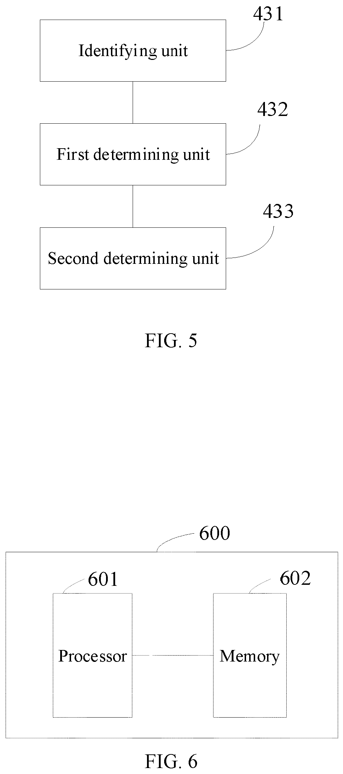

In some embodiments of the present disclosure, as shown in FIG. 5, the determining module 43 specifically includes:
an identifying unit 431 configured to identify the detection result;
a first determining unit 432 configured to determine a state of a 5G network according to an identification result; and
a second determining unit 433 configured to determine whether to trigger the IMS registration process according to the state of the 5G network.

In some embodiments of the present disclosure, the detection result includes the IMS-VoPS-3GPP field.

The identifying unit 431 is specifically configured to:
identify the IMS-VoPS-3GPP field in the detection result;
determine that the identification result is that the electronic terminal activates the IMS service, when it is identified that the IMS-VoPS-3GPP field is 1; and
determine that the identification result is that the electronic terminal does not activate the IMS service, when it is identified that the IMS-VoPS-3GPP field is 0.

In some embodiments of the present disclosure, the first determining unit 432 is specifically configured to:
determine that the state of the 5G network is that the 5G network supports the IMS, when the identification result is that the electronic terminal activates the IMS service; and
determine that the state of the 5G network is that the 5G network does not support the IMS, when the identification result is that the electronic terminal does not activate the IMS service.

In some embodiments of the present disclosure, the second determining unit 433 is specifically configured to:
trigger the IMS registration process, when the state of the 5G network is that the 5G network supports the IMS; and
stop triggering the IMS registration process, when the state of the 5G network is that the 5G network does not support the IMS.

It can be appreciated from the above that in the IMS registration device provided by the present disclosure, the IMS registration request can be sent to the core network to enable the core network to detect, according to the IMS registration request, whether the electronic terminal activates the IMS service and to feed back the detection result. Then, it is determined whether to trigger the IMS registration process according to the detection result, so as to avoid that electronic terminal triggers unnecessary IMS registration processes to save communication resources.

Furthermore, an embodiment of the present disclosure also provides an electronic terminal. As shown in FIG. 6, an electronic terminal 600 includes a processor 601 and a memory 602. The processor 601 is electrically connected to the memory 602.

The processor 601 is a control center of the electronic terminal 600, is connected with all the parts of the whole electronic terminal by various interfaces and lines, and is configured to execute various functions of the electronic terminal and process the data by executing or loading software programs stored in the memory 620 and calling data stored in the memory 602, so as to carry out integral monitoring on the electronic terminal.

In the present embodiment, the processor 601 in the electronic terminal 600 loads, according to the following steps, instructions corresponding to one or more processes of one or more application programs into the memory 602, and the processor 601 runs the one or more applications stored in the memory. 602, thereby realizing various functions:
sending an IMS registration request to a core network to enable the core network to detect, according to the IMS registration request, whether the electronic terminal activates an IMS service and to feed back a detection result;
receiving the detection result fed back by the core network; and
determining whether to trigger an IMS registration process according to the detection result.

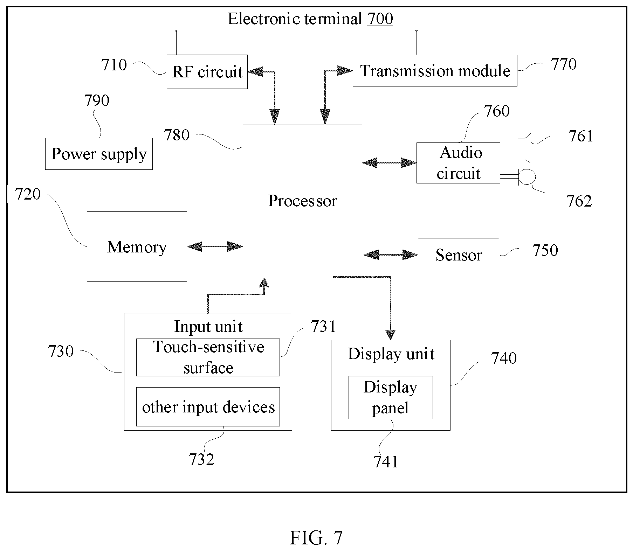

Please refer to FIG. 7. FIG. 7 illustrates a structural schematic diagram of an electronic terminal 700 provided by an embodiment of the present disclosure. The electronic terminal 700 can be used for implementing the IMS registration method provided in any one of the above-mentioned embodiments. The electronic can be connected to a network.

An RF circuit 710 is configured to receive and transmit electromagnetic waves and to realize conversions of the electromagnetic waves and electrical signals, thereby communicating with a communication network or any other device. The RF circuit 710 can include various conventional circuit elements used for performing these functions, for example, an antenna, a radio frequency transmitter, a digital signal processor, an encryption/decryption chip, a subscriber identification module (SIM) card, a memory and the like. The RF circuit 710 can communicate with various networks, for example, an internet, an intranet or a wireless network, or can communicate with any other device via a wireless network. The above-mentioned wireless network can include a cellular telephone network, a wireless local area network or a metropolitan area network. The above-mentioned wireless network can use various communication standards, protocols and technologies and can include but not limited to, Global System of Mobile Communication (GSM), Enhanced Data GSM Environment (EDGE), Wideband Code Division Multiple Access (WCDMA), Code Division Multiple Access (CDMA), Time Division Multiple Access (TDMA), Wireless Fidelity (Wi-Fi, for example, Institute of Electrical and Electronics Engineers (IEEE) 802.11a, IEEE 802.11b, IEEE 802.11g and/or IEEE 802.11n), Voice over Internet Protocol (VoIP), Worldwide Interoperability for Microwave Access (Wi-Max), other protocols for E-mail, instant messaging and Short Messaging Service and other suitable communication protocols, and can include protocols which are not developed currently.

A memory 720 can be configured to store software programs and modules, such as the program instructions/modules corresponding to any one of the direct connection call methods in the above-mentioned embodiments. The processor 780 is configured to execute various functional applications and data processing by running the software programs and modules stored in the memory 720. That is, the functions of the direct connection call methods are realized. The memory 720 can include a high-speed random access memory, and can also include a non-volatile memory, such as one or more magnetic storage devices, a flash memory, or other non-volatile solid-state memories. In some examples, the memory 720 can further include at least one memory located remotely from the processor 780. The at least one remote memory can be connected to the electronic terminal 700 through a network. Examples of such networks include, but are not limited to, an internet, an intranet, a local area network, a mobile communication network, and combinations thereof.

An input unit 730 can be configured to receive input number or character information and configured to generate keyboard, mouse, joystick, optical or trajectory ball signal inputs related to a user's setting and functional control. In detail, the input unit 730 can include a touch-sensitive surface 731 and other input devices 732. The touch-sensitive surface 731, which is also called a touch display screen or a touch panel, can be configured to detect touch operations of a user on or near the touch-sensitive surface 731 (for example, operations carried out by the user through any suitable objects or attachments, such as a finger, a touch pen and the like, on the touch-sensitive surface 731 or near the touch-sensitive surface 731) and to drive a corresponding device connected therewith according to a preset program. Optionally, the touch-sensitive surface 731 can include a touch detection device and a touch controller. The touch detection device detects the touch direction of the user, detects a signal caused by the touch operation, and transmits the signal to the touch controller. The touch controller receives touch information from the touch detection device, converts the touch information into a contact coordinate, and then transmits the contact coordinate to the processor 780 and can receive a command transmitted by the processor 780 and execute the command. Moreover, the touch-sensitive surface 731 can be one of various types, such as a resistance type, a capacitance type, an infrared type, a surface acoustic wave type and the like. Besides the touch-sensitive surface 731, the input unit 730 can also include the other input devices 732. In detail, other input devices 732 can include, but is not limited to, one or more of a physical keyboard, function keys (such as a volume control key, a switching key and the like), a trackball, a mouse, a joystick and the like.

A display unit 740 can be configured to display information input by the user or information provided for the user and various graphical user interfaces of the electronic terminal 700. The graphical user interfaces can be constituted by graphics, texts, icons, videos and any combinations of them. The display unit 740 can include a display panel 741. Optionally, the display panel 741 can be configured in forms of a Liquid Crystal Display (LCD), an Organic Light-Emitting Diode (OLED) and the like. Furthermore, the touch panel 731 can cover the display panel 741. When the touch-sensitive surface 731 detects a touch operation on or near it, the signal caused by the touch operation is transmitted to the processor 780 to determine the type of a touch event. Then, the processor 780 provides a corresponding visual output on the display panel 741 according to the type of the touch event. Although the touch-sensitive surface 731 and the display panel 741 in FIG. 7 are served as two independent parts for accomplishing input and output functions, it can be understood that the touch-sensitive surface 731 and the display panel 741 can be integrated to accomplish the input and output functions.

The electronic terminal 700 can further include at least one sensor 750, such as an optical sensor, a motion sensor and other sensors. In detail, the optical sensor can include an environmental light sensor and a proximity sensor. The environmental light sensor can adjust brightness of the display panel 741 according to the lightness of environmental light. The proximity sensor can generate an interruption when the electronic terminal 700 is flipped or closed or turned off. As one type of the motion sensor, an accelerometer sensor can detect the value of an acceleration in each direction (generally in three axial directions), can detect the value and the direction of gravity in a static state, which can be used in posture identifying functions (such as switching between a horizontal screen and a vertical screen, switching related to a game, and calibration on the posture of a magnetometer), vibration identifying functions (such as for pedometer and striking) and the like. Furthermore, a gyroscope, a barometer, a humidity meter, a thermometer, an infrared sensor and other sensors can be integrated into the electronic terminal 700, and explanations are not repeated herein.

An audio circuit 760, a speaker 761 and a microphone 762 can provide an audio interface between the user and the electronic terminal 700. The audio circuit 760 can transmit an electric signal obtained by converting received audio data to the speaker 761. The electric signal is converted into a sound signal to be outputted by the speaker 761. On the other hand, the microphone 762 converts a collected sound signal into an electric signal. The audio circuit 760 receives the electric signal and converts the electric signal into audio data. After the audio data is outputted to the processor 780 and is processed, it is transmitted, for example, to another terminal through the RF circuit 710, or is outputted to the memory 720 in order to be further processed. The audio circuit 760 can further include an ear plug hole for providing communication between an external earphone and the electronic terminal 700.

The electronic terminal 700 can help the user to receive requests, send E-mails and the like by a transmission module 770 (for example, a Wi-Fi module). The transmission module 770 provides wireless broadband internet access for the user. Although the transmission module 770 is shown in FIG. 7, it should be understood that the transmission module 770 is not the necessary part of the electronic terminal 700 and can completely be omitted as required without changing the scope of essence of the present disclosure.

The processor 780 is a control center of the electronic terminal 700, is connected with all the parts of the whole mobile phone by various interfaces and lines, and is configured to execute various functions of the electronic terminal 700 and process the data by executing or loading software programs stored in a memory 720 and calling data stored in the memory 720, so as to carry out integral monitoring on the electronic terminal. Optionally, the processor 780 can include one or more processing cores. In some embodiments, the processor 780 can be integrated with an application processor and a modulation/demodulation processor. The application processor is mainly configured to process an operating system, at least one user interface, at least one application program and the like. The modulation/demodulation processor is mainly configured to process wireless communication. It can be understood that the modulation/demodulation processor can also be not integrated into the processor 780.

The electronic terminal 700 further includes a power supply 760 (such as a battery) for supplying power to each part. In some embodiments, the power supply can be logically connected with the processor 780 by a power supply management system, so as to implement functions of charge management, discharge management, power consumption management and the like by the power supply management system. The power supply 760 can further include one or more direct current or alternating current power supplies, recharging systems, power supply failure detection circuits, power converters or inverters, power supply status indicators and the like.

Although not shown in the FIG. 7, the electronic terminal 700 can further include a camera (for example, a front camera or a rear camera), a BLUETOOTH module, and the like which are not further described herein. In the present embodiment, the display unit of the electronic terminal is a touch screen display, and the electronic terminal further includes a memory and one or more programs. The one or more programs are stored in the memory and configured to be executed by one or more processors to perform instructions for executing the following operations contained in the one or more programs:
sending an IMS registration request to a core network to enable the core network to detect, according to the IMS registration request, whether the electronic terminal activates an IMS service and to feed back a detection result;
receiving the detection result fed back by the core network; and
determining whether to trigger an IMS registration process according to the detection result.

In specific implementations, the above-mentioned modules can be implemented as independent entities, and also can be combined in any combination and implemented as one or a plurality of entities. For the specific implementations of each module above, reference can be made to the above-mentioned method embodiments, and details are not further described herein.

Those skilled in the art can understand that all or some of the steps in various methods of the above-mentioned embodiments can be implemented through instructions or implemented through instructions controlling relevant hardware, and the instructions can be stored in a computer-readable storage medium and loaded and executed by a processor. To this end, an embodiment of the present disclosure provides a storage medium storing a plurality of instructions, and the instructions can be loaded by the processor, to perform the steps in the IMS registration method provided by any one of the embodiments of the present disclosure.

The storage medium can include: a read-only memory (ROM), a random access memory (RAM), a magnetic disk, an optical disc or the like.

Since the instructions stored in the storage medium can perform the steps in the IMS registration method provided by any one of the embodiments of the present disclosure, the instructions can implement advantageous effects which can be implemented by the IMS registration method provided by any one of the embodiments of the present disclosure. Details can be referred to the above-mentioned embodiments and are not described herein.

Specific implementations of each operation can be referred to the above-mentioned embodiments and are not described herein.

## Claims

1. An Internet Protocol Multimedia Subsystem, IMS, registration method, applied to an electronic terminal (600, 700), the method comprising:
sending (201, 301) an IMS registration request, including an identification code, to a core network to enable the core network to detect, according to the IMS registration request, whether the electronic terminal (600, 700) activates an IMS service;
receiving (202) a detection result fed back based on the identification code by the core network; and
determining (203) whether to trigger an IMS registration process according to the detection result;
wherein the determining (203) whether to trigger the IMS registration process according to the detection result comprises:
identifying the detection result;
determining a state of a 5G network according to an identification result, wherein the state of the 5G network indicates whether the 5G network supports an IMS service; and
determining whether to trigger the IMS registration process according to the state of the 5G network;
wherein the detection result comprises an IMS-VoPS-3GPP field; and the identifying the detection result comprises:
identifying (303) the IMS-VoPS-3GPP field in the detection result;
determining (304) that the identification result is that the electronic terminal (600, 700) activates the IMS service, when it is identified that the IMS-VoPS-3GPP field is 1; and
determining (307) that the identification result is that the electronic terminal (600, 700) does not activate the IMS service, when it is identified that the IMS-VoPS-3GPP field is 0.

2. The IMS registration method according to claim 1, wherein the determining the state of the 5G network according to the identification result comprises:
determining (305) that the state of the 5G network is that the 5G network supports the IMS, when the identification result is that the electronic terminal (600, 700) activates the IMS service; and
determining (308) that the state of the 5G network is that the 5G network does not support the IMS, when the identification result is that the electronic terminal (600, 700) does not activate the IMS service.

3. The IMS registration method according to claim 1, wherein the determining whether to trigger the IMS registration process according to the state of the 5G network comprises:
triggering (306) the IMS registration process, when the state of the 5G network is that the 5G network supports the IMS; and
stopping (309) triggering the IMS registration process, when the state of the 5G network is that the 5G network does not support the IMS.

4. A computer-readable storage medium, the computer-readable storage medium storing a plurality of instructions therein, wherein the instructions are adapted to be loaded by a processor (601, 780) to execute the following steps:
sending (201, 301) an Internet Protocol Multimedia Subsystem, IMS, registration request, including an identification code, to a core network to enable the core network to detect, according to the IMS registration request, whether the electronic terminal (600, 700) activates an IMS service;
receiving (202) a detection result fed back based on the identification code by the core network; and
determining (203) whether to trigger an IMS registration process according to the detection result;
wherein when executing the determining (203) whether to trigger the IMS registration process according to the detection result, the processor (601, 780) is configured to execute the following steps:
identifying the detection result;
determining a state of a 5G network according to an identification result, wherein the state of the 5G network indicates whether the 5G network supports an IMS service; and
determining whether to trigger the IMS registration process according to the state of the 5G network;
wherein the detection result comprises an IMS-VoPS-3GPP field; and
when executing the identifying the detection result, the processor (601, 780) is configured to execute the following steps:
identifying (303) the IMS-VoPS-3GPP field in the detection result;
determining (304) that the identification result is that the electronic terminal (600, 700) activates the IMS service, when it is identified that the IMS-VoPS-3GPP field is 1; and
determining (307) that the identification result is that the electronic terminal (600, 700) does not activate the IMS service, when it is identified that the IMS-VoPS-3GPP field is 0.

5. The computer-readable storage medium according to claim 4, wherein when executing the determining the state of the 5G network according to the identification result, the processor (601, 780) is configured to execute the following steps:
determining (305) that the state of the 5G network is that the 5G network supports the IMS, when the identification result is that the electronic terminal (600, 700) activates the IMS service; and
determining (308) that the state of the 5G network is that the 5G network does not support the IMS, when the identification result is that the electronic terminal (600, 700) does not activate the IMS service.

6. The computer-readable storage medium according to claim 4, wherein when executing the determining whether to trigger the IMS registration process according to the state of the 5G network, the processor (601, 780) is configured to execute the following steps:
triggering (306) the IMS registration process, when the state of the 5G network is that the 5G network supports the IMS; and
stopping (309) triggering the IMS registration process, when the state of the 5G network is that the 5G network does not support the IMS.

7. An electronic terminal (600, 700), comprising a processor (601, 780) and a memory (602, 720), wherein the processor (601, 780) is electrically connected to the memory (602, 720), and the memory is configured to store instructions and data, the processor (601, 780) is configured to execute the following steps:
sending (201, 301) an Internet Protocol Multimedia Subsystem, IMS registration request, including an identification code, to a core network to enable the core network to detect, according to the IMS registration request, whether the electronic terminal (600, 700) activates an IMS service;
receiving (202) a detection result fed back based on the identification code by the core network; and
determining (203) whether to trigger an IMS registration process according to the detection result;
wherein when executing the determining (203) whether to trigger the IMS registration process according to the detection result, the processor (601, 780) is configured to execute the following steps:
identifying the detection result;
determining a state of a 5G network according to an identification result, wherein the state of the 5G network indicates whether the 5G network supports an IMS service; and
determining whether to trigger the IMS registration process according to the state of the 5G network;
wherein the detection result comprises an IMS-VoPS-3GPP field; and
when executing the identifying the detection result, the processor (601, 780) is configured to execute the following steps:
identifying (303) the IMS-VoPS-3GPP field in the detection result;
determining (304) that the identification result is that the electronic terminal (600, 700) activates the IMS service, when it is identified that the IMS-VoPS-3GPP field is 1; and
determining (307) that the identification result is that the electronic terminal (600, 700) does not activate the IMS service, when it is identified that the IMS-VoPS-3GPP field is 0.

8. The electronic terminal (600, 700) according to claim 7, wherein when executing the determining the state of the 5G network according to the identification result, the processor (601, 780) is configured to execute the following steps:
determining (305) that the state of the 5G network is that the 5G network supports the IMS, when the identification result is that the electronic terminal (600, 700) activates the IMS service; and
determining (308) that the state of the 5G network is that the 5G network does not support the IMS, when the identification result is that the electronic terminal (600, 700) does not activate the IMS service.

9. The electronic terminal (600, 700) according to claim 7, wherein when executing the determining whether to trigger the IMS registration process according to the state of the 5G network, the processor (601, 780) is configured to execute the following steps:
triggering (306) the IMS registration process, when the state of the 5G network is that the 5G network supports the IMS; and
stopping (309) triggering the IMS registration process, when the state of the 5G network is that the 5G network does not support the IMS.

## Patentansprüche

1. Internet Protocol Multimedia Subsystem (IMS)-Registrierungsverfahren, angewendet auf ein elektronisches Terminal (600, 700), wobei das Verfahren umfasst:
Senden (201, 301) einer IMS-Registrierungsanfrage, die einen Identifikationscode enthält, an ein Kernnetzwerk, um dem Kernnetzwerk zu ermöglichen, anhand der IMS-Registrierungsanfrage zu erkennen, ob das elektronische Terminal (600, 700) einen IMS-Dienst aktiviert;
Empfangen (202) eines vom Kernnetzwerk auf der Grundlage des Identifikationscodes zurückgemeldeten Erkennungsergebnisses; und
Bestimmen (203), ob ein IMS-Registrierungsprozess gemäß dem Erkennungsergebnis ausgelöst werden soll;
wobei, dass das Bestimmen (203), ob der IMS-Registrierungsprozess gemäß dem Erkennungsergebnis ausgelöst werden soll, Folgendes umfasst:
Identifizieren des Erkennungsergebnisses;
Bestimmen eines Zustands eines 5G-Netzwerkes gemäß einem Identifikationsergebnis, wobei der Zustand des 5G-Netzwerkes angibt, ob das 5G-Netzwerk einen IMS-Dienst unterstützt; und
Bestimmen, ob der IMS-Registrierungsprozess gemäß dem Zustand des 5G-Netzwerkes ausgelöst werden soll;
wobei das Erkennungsergebnis ein IMS-VoPS-3GPP-Feld umfasst; und das Identifizieren des Erkennungsergebnisses umfasst:
Identifizieren (303) des IMS-VoPS-3GPP-Feldes im Erkennungsergebnis;
Bestimmen (304), dass das Identifikationsergebnis darin besteht, dass das elektronische Terminal (600, 700) den IMS-Dienst aktiviert, wenn festgestellt wird, dass das IMS-VoPS-3GPP-Feld den Wert 1 hat; und
Bestimmen (307), dass das Identifikationsergebnis darin besteht, dass das elektronische Terminal (600, 700) den IMS-Dienst nicht aktiviert, wenn festgestellt wird, dass das IMS-VoPS-3GPP-Feld den Wert 0 hat.

2. IMS-Registrierungsverfahren nach Anspruch 1, wobei das Bestimmen des Zustands des 5G-Netzwerkes gemäß dem Identifikationsergebnis Folgendes umfasst:
Bestimmen (305), dass der Zustand des 5G-Netzwerkes darin besteht, dass das 5G-Netzwerk den IMS unterstützt, wenn das Identifikationsergebnis darin besteht, dass das elektronische Terminal (600, 700) den IMS-Dienst aktiviert; und
Bestimmen (308), dass der Zustand des 5G-Netzwerkes darin besteht, dass das 5G-Netzwerk den IMS nicht unterstützt, wenn das Identifikationsergebnis darin besteht, dass das elektronische Terminal (600, 700) den IMS-Dienst nicht aktiviert.

3. IMS-Registrierungsverfahren nach Anspruch 1, wobei das Bestimmen, ob der IMS-Registrierungsprozess gemäß dem Zustand des 5G-Netzwerkes ausgelöst werden soll, Folgendes umfasst:
Auslösen (306) des IMS-Registrierungsprozesses, wenn der Zustand des 5G-Netzwerkes darin besteht, dass das 5G-Netzwerk den IMS unterstützt; und
Beenden (309) des Auslösens des IMS-Registrierungsprozesses, wenn der Zustand des 5G-Netzwerkes darin besteht, dass das 5G-Netzwerk den IMS nicht unterstützt.

4. Computerlesbares Speichermedium, wobei das computerlesbare Speichermedium eine Vielzahl von Anweisungen speichert, wobei die Anweisungen so ausgelegt sind, dass sie von einem Prozessor (601, 780) geladen werden, um die folgenden Schritte auszuführen:
Senden (201, 301) einer Internet Protocol Multimedia Subsystem (IMS)-Registrierungsanfrage, die einen Identifikationscode enthält, an ein Kernnetzwerk, um dem Kernnetzwerk zu ermöglichen, anhand der IMS-Registrierungsanfrage zu erkennen, ob das elektronische Terminal (600, 700) einen IMS-Dienst aktiviert;
Empfangen (202) eines vom Kernnetzwerk auf der Grundlage des Identifikationscodes zurückgemeldeten Erkennungsergebnisses; und
Bestimmen (203), ob ein IMS-Registrierungsprozess gemäß dem Erkennungsergebnis ausgelöst werden soll;
wobei, dass beim Ausführen des Bestimmens (203), ob der IMS-Registrierungsprozess gemäß dem Erkennungsergebnis ausgelöst werden soll, der Prozessor (601, 780) so konfiguriert ist, dass er die folgenden Schritte ausführt:
Identifizieren des Erkennungsergebnisses;
Bestimmen eines Zustands eines 5G-Netzwerkes gemäß einem Identifikationsergebnis, wobei der Zustand des 5G-Netzwerkes angibt, ob das 5G-Netzwerk einen IMS-Dienst unterstützt; und
Bestimmen, ob der IMS-Registrierungsprozess gemäß dem Zustand des 5G-Netzwerkes ausgelöst werden soll;
wobei das Erkennungsergebnis ein IMS-VoPS-3GPP-Feld umfasst; und
beim Ausführen des Identifizierens des Erkennungsergebnisses ist der Prozessor (601, 780) so konfiguriert, dass er die folgenden Schritte ausführt:
Identifizieren (303) des IMS-VoPS-3GPP-Feldes im Erkennungsergebnis;
Bestimmen (304), dass das Identifikationsergebnis darin besteht, dass das elektronische Terminal (600, 700) den IMS-Dienst aktiviert, wenn festgestellt wird, dass das IMS-VoPS-3GPP-Feld den Wert 1 hat; und
Bestimmen (307), dass das Identifikationsergebnis darin besteht, dass das elektronische Terminal (600, 700) den IMS-Dienst nicht aktiviert, wenn festgestellt wird, dass das IMS-VoPS-3GPP-Feld den Wert 0 hat.

5. Computerlesbares Speichermedium nach Anspruch 4, wobei beim Ausführen des Bestimmens des Zustands des 5G-Netzwerkes gemäß dem Identifikationsergebnis der Prozessor (601, 780) so konfiguriert ist, dass er die folgenden Schritte ausführt:
Bestimmen (305), dass der Zustand des 5G-Netzwerkes darin besteht, dass das 5G-Netzwerk den IMS unterstützt, wenn das Identifikationsergebnis darin besteht, dass das elektronische Terminal (600, 700) den IMS-Dienst aktiviert; und
Bestimmen (308), dass der Zustand des 5G-Netzwerkes darin besteht, dass das 5G-Netzwerk den IMS nicht unterstützt, wenn das Identifikationsergebnis darin besteht, dass das elektronische Terminal (600, 700) den IMS-Dienst nicht aktiviert.

6. Computerlesbares Speichermedium nach Anspruch 4, wobei beim Ausführen des Bestimmens, ob der IMS-Registrierungsprozess gemäß dem Zustand des 5G-Netzwerkes ausgelöst werden soll, der Prozessor (601, 780) so konfiguriert ist, dass er die folgenden Schritte ausführt:
Auslösen (306) des IMS-Registrierungsprozesses, wenn der Zustand des 5G-Netzwerkes darin besteht, dass das 5G-Netzwerk den IMS unterstützt; und
Beenden (309) des Auslösens des IMS-Registrierungsprozesses, wenn der Zustand des 5G-Netzwerkes darin besteht, dass das 5G-Netzwerk den IMS nicht unterstützt.

7. Elektronisches Terminal (600, 700), umfassend einen Prozessor (601, 780) und einen Speicher (602, 720), wobei der Prozessor (601, 780) elektrisch mit dem Speicher (602, 720) verbunden ist und der Speicher so konfiguriert ist, Anweisungen und Daten zu speichern, wobei der Prozessor (601, 780) so konfiguriert ist, die folgenden Schritte auszuführen:
Senden (201, 301) einer Internet Protocol Multimedia Subsystem (IMS)-Registrierungsanfrage, die einen Identifikationscode enthält, an ein Kernnetzwerk, um dem Kernnetzwerk zu ermöglichen, anhand der IMS-Registrierungsanfrage zu erkennen, ob das elektronische Terminal (600, 700) einen IMS-Dienst aktiviert;
Empfangen (202) eines vom Kernnetzwerk auf der Grundlage des Identifikationscodes zurückgemeldeten Erkennungsergebnisses; und
Bestimmen (203), ob ein IMS-Registrierungsprozess gemäß dem Erkennungsergebnis ausgelöst werden soll;
wobei, dass beim Ausführen des Bestimmens (203), ob der IMS-Registrierungsprozess gemäß dem Erkennungsergebnis ausgelöst werden soll, der Prozessor (601, 780) so konfiguriert ist, dass er die folgenden Schritte ausführt:
Identifizieren des Erkennungsergebnisses;
Bestimmen eines Zustands eines 5G-Netzwerkes gemäß einem Identifikationsergebnis, wobei der Zustand des 5G-Netzwerkes angibt, ob das 5G-Netzwerk einen IMS-Dienst unterstützt; und
Bestimmen, ob der IMS-Registrierungsprozess gemäß dem Zustand des 5G-Netzwerkes ausgelöst werden soll;
wobei das Erkennungsergebnis ein IMS-VoPS-3GPP-Feld umfasst; und
beim Ausführen des Identifizierens des Erkennungsergebnisses ist der Prozessor (601, 780) so konfiguriert, dass er die folgenden Schritte ausführt:
Identifizieren (303) des IMS-VoPS-3GPP-Feldes im Erkennungsergebnis;
Bestimmen (304), dass das Identifikationsergebnis darin besteht, dass das elektronische Terminal (600, 700) den IMS-Dienst aktiviert, wenn festgestellt wird, dass das IMS-VoPS-3GPP-Feld den Wert 1 hat; und
Bestimmen (307), dass das Identifikationsergebnis darin besteht, dass das elektronische Terminal (600, 700) den IMS-Dienst nicht aktiviert, wenn festgestellt wird, dass das IMS-VoPS-3GPP-Feld den Wert 0 hat.

8. Elektronisches Terminal (600, 700) nach Anspruch 7, wobei beim Ausführen des Bestimmens des Zustands des 5G-Netzwerkes gemäß dem Identifikationsergebnis der Prozessor (601, 780) so konfiguriert ist, dass er die folgenden Schritte ausführt:
Bestimmen (305), dass der Zustand des 5G-Netzwerkes darin besteht, dass das 5G-Netzwerk den IMS unterstützt, wenn das Identifikationsergebnis darin besteht, dass das elektronische Terminal (600, 700) den IMS-Dienst aktiviert; und
Bestimmen (308), dass der Zustand des 5G-Netzwerkes darin besteht, dass das 5G-Netzwerk den IMS nicht unterstützt, wenn das Identifikationsergebnis darin besteht, dass das elektronische Terminal (600, 700) den IMS-Dienst nicht aktiviert.

9. Elektronisches Terminal (600, 700) nach Anspruch 7, wobei beim Ausführen des Bestimmens, ob der IMS-Registrierungsprozess gemäß dem Zustand des 5G-Netzwerkes ausgelöst werden soll, der Prozessor (601, 780) so konfiguriert ist, dass er die folgenden Schritte ausführt:
Auslösen (306) des IMS-Registrierungsprozesses, wenn der Zustand des 5G-Netzwerkes darin besteht, dass das 5G-Netzwerk den IMS unterstützt; und
Beenden (309) des Auslösens des IMS-Registrierungsprozesses, wenn der Zustand des 5G-Netzwerkes darin besteht, dass das 5G-Netzwerk den IMS nicht unterstützt.

## Revendications

1. Un procédé d'enregistrement de sous-système multimédia sur protocole Internet, IMS (*Internet Protocol Multimedia Subsystem*)*,* appliqué à un terminal électronique (600, 700), le procédé comprenant :
l'envoi (201, 301) d'une demande d'enregistrement IMS, incluant un code d'identification, à un réseau central pour permettre au réseau central de détecter, selon la demande d'enregistrement IMS, si le terminal électronique (600, 700) active un service IMS ;
la réception (202) d'un résultat de détection renvoyé sur la base du code d'identification par le réseau central ; et
la détermination (203) de déclencher ou non un processus d'enregistrement IMS selon le résultat de détection ;
dans lequel la détermination (203) de déclencher ou non le processus d'enregistrement IMS selon le résultat de détection comprend :
l'identification du résultat de détection ;
la détermination d'un état d'un réseau 5G selon un résultat d'identification, l'état du réseau 5G indiquant si le réseau 5G prend en charge un service IMS ; et
la détermination de déclencher ou non le processus d'enregistrement IMS selon l'état du réseau 5G ;
dans lequel le résultat de détection comprend un champ IMS-VoPS-3GPP ; et
l'identification du résultat de détection comprend :
l'identification (303) du champ IMS-VoPS-3GPP dans le résultat de détection ;
la détermination (304) du fait que le résultat d'identification est que le terminal électronique (600, 700) active le service IMS, lorsqu'il est identifié que le champ IMS-VoPS-3GPP est 1 ; et
la détermination (307) du fait que le résultat d'identification est que le terminal électronique (600, 700) n'active pas le service IMS, lorsqu'il est identifié que le champ IMS-VoPS-3GPP est 0.

2. Le procédé d'enregistrement IMS selon la revendication 1, dans lequel la détermination de l'état du réseau 5G selon le résultat d'identification comprend :
la détermination (305) du fait que l'état du réseau 5G est que le réseau 5G prend en charge l'IMS, lorsque le résultat d'identification est que le terminal électronique (600, 700) active le service IMS ; et
la détermination (308) du fait que l'état du réseau 5G est que le réseau 5G ne prend pas en charge l'IMS, lorsque le résultat d'identification est que le terminal électronique (600, 700) n'active pas le service IMS.

3. Le procédé d'enregistrement IMS selon la revendication 1, dans lequel la détermination de déclencher ou non le processus d'enregistrement IMS selon l'état du réseau 5G comprend :
le déclenchement (306) du processus d'enregistrement IMS, lorsque l'état du réseau 5G est que le réseau 5G prend en charge l'IMS ; et
l'arrêt (309) du déclenchement du processus d'enregistrement IMS, lorsque l'état du réseau 5G est que le réseau 5G ne prend pas en charge l'IMS.

4. Un support de stockage lisible par ordinateur, une pluralité d'instructions étant stockées dans le support de stockage lisible par ordinateur, dans lequel les instructions sont adaptées à être chargées par un processeur (601, 780) pour exécuter les étapes suivantes :
l'envoi (201, 301) d'une demande d'enregistrement de sous-système multimédia sur protocole Internet, IMS, incluant un code d'identification, à un réseau central pour permettre au réseau central de détecter, selon la demande d'enregistrement IMS, si le terminal électronique (600, 700) active un service IMS ;
la réception (202) d'un résultat de détection renvoyé sur la base du code d'identification par le réseau central ; et
la détermination (203) de déclencher ou non un processus d'enregistrement IMS selon le résultat de détection ;
dans lequel lors de l'exécution de la détermination (203) de déclencher ou non le processus d'enregistrement IMS selon le résultat de détection, le processeur (601, 780) est configuré pour exécuter les étapes suivantes :
l'identification du résultat de détection ;
la détermination d'un état d'un réseau 5G selon un résultat d'identification, l'état du réseau 5G indiquant si le réseau 5G prend en charge un service IMS ; et
la détermination de déclencher ou non le processus d'enregistrement IMS selon l'état du réseau 5G ;
dans lequel le résultat de détection comprend un champ IMS-VoPS-3GPP ; et
lors de l'exécution de l'identification du résultat de détection, le processeur (601, 780) est configuré pour exécuter les étapes suivantes :
l'identification (303) du champ IMS-VoPS-3GPP dans le résultat de détection ;
la détermination (304) du fait que le résultat d'identification est que le terminal électronique (600, 700) active le service IMS, lorsqu'il est identifié que le champ IMS-VoPS-3GPP est 1 ; et
la détermination (307) du fait que le résultat d'identification est que le terminal électronique (600, 700) n'active pas le service IMS, lorsqu'il est identifié que le champ IMS-VoPS-3GPP est 0.

5. Le support de stockage lisible par ordinateur selon la revendication 4, dans lequel lors de l'exécution de la détermination de l'état du réseau 5G selon le résultat d'identification, le processeur (601, 780) est configuré pour exécuter les étapes suivantes :
la détermination (305) du fait que l'état du réseau 5G est que le réseau 5G prend en charge l'IMS, lorsque le résultat d'identification est que le terminal électronique (600, 700) active le service IMS ; et
la détermination (308) du fait que l'état du réseau 5G est que le réseau 5G ne prend pas en charge l'IMS, lorsque le résultat d'identification est que le terminal électronique (600, 700) n'active pas le service IMS.

6. Le support de stockage lisible par ordinateur selon la revendication 4, dans lequel lors de l'exécution de la détermination de déclencher ou non le processus d'enregistrement IMS selon l'état du réseau 5G, le processeur (601, 780) est configuré pour exécuter les étapes suivantes :
le déclenchement (306) du processus d'enregistrement IMS, lorsque l'état du réseau 5G est que le réseau 5G prend en charge l'IMS ; et
l'arrêt (309) du déclenchement du processus d'enregistrement IMS, lorsque l'état du réseau 5G est que le réseau 5G ne prend pas en charge l'IMS.

7. Un terminal électronique (600, 700), comprenant un processeur (601, 780) et une mémoire (602, 720), dans lequel le processeur (601, 780) est connecté électriquement à la mémoire (602, 720), et la mémoire est configurée pour stocker des instructions et des données, le processeur (601, 780) étant configuré pour exécuter les étapes suivantes :
l'envoi (201, 301) d'une demande d'enregistrement de sous-système multimédia sur protocole Internet, IMS, incluant un code d'identification, à un réseau central pour permettre au réseau central de détecter, selon la demande d'enregistrement IMS, si le terminal électronique (600, 700) active un service IMS ;
la réception (202) d'un résultat de détection renvoyé sur la base du code d'identification par le réseau central ; et
la détermination (203) de déclencher ou non un processus d'enregistrement IMS selon le résultat de détection ;
dans lequel lors de l'exécution de la détermination (203) de déclencher ou non le processus d'enregistrement IMS selon le résultat de détection, le processeur (601, 780) est configuré pour exécuter les étapes suivantes :
l'identification du résultat de détection ;
la détermination d'un état d'un réseau 5G selon un résultat d'identification, l'état du réseau 5G indiquant si le réseau 5G prend en charge un service IMS ; et
la détermination de déclencher ou non le processus d'enregistrement IMS selon l'état du réseau 5G ;
dans lequel le résultat de détection comprend un champ IMS-VoPS-3GPP ; et
lors de l'exécution de l'identification du résultat de détection, le processeur (601, 780) est configuré pour exécuter les étapes suivantes :
l'identification (303) du champ IMS-VoPS-3GPP dans le résultat de détection ;
la détermination (304) du fait que le résultat d'identification est que le terminal électronique (600, 700) active le service IMS, lorsqu'il est identifié que le champ IMS-VoPS-3GPP est 1 ; et
la détermination (307) du fait que le résultat d'identification est que le terminal électronique (600, 700) n'active pas le service IMS, lorsqu'il est identifié que le champ IMS-VoPS-3GPP est 0.

8. Le terminal électronique (600, 700) selon la revendication 7, dans lequel lors de l'exécution de la détermination de l'état du réseau 5G selon le résultat d'identification, le processeur (601, 780) est configuré pour exécuter les étapes suivantes :
la détermination (305) du fait que l'état du réseau 5G est que le réseau 5G prend en charge l'IMS, lorsque le résultat d'identification est que le terminal électronique (600, 700) active le service IMS ; et
la détermination (308) du fait que l'état du réseau 5G est que le réseau 5G ne prend pas en charge l'IMS, lorsque le résultat d'identification est que le terminal électronique (600, 700) n'active pas le service IMS.

9. Le terminal électronique (600, 700) selon la revendication 7, dans lequel lors de l'exécution de la détermination de déclencher ou non le processus d'enregistrement IMS selon l'état du réseau 5G, le processeur (601, 780) est configuré pour exécuter les étapes suivantes :
le déclenchement (306) du processus d'enregistrement IMS, lorsque l'état du réseau 5G est que le réseau 5G prend en charge l'IMS ; et
l'arrêt (309) du déclenchement du processus d'enregistrement IMS, lorsque l'état du réseau 5G est que le réseau 5G ne prend pas en charge l'IMS.
